Europäisches Patentamt

European Patent Office

Office européen des brevets

(11) Veröffentlichungsnummer: **0 197 329 B1**

# (12) EUROPÄISCHE PATENTSCHRIFT

(45) Veröffentlichungstag der Patentschrift: **29.04.92**

(51) Int. Cl.⁵: **H05B 7/148**

(21) Anmeldenummer: **86103145.8**

(22) Anmeldetag: **08.03.86**

(54) Verfahren zur Symmetrierung elektrischer Grössen in Drehstrom-Lichtbogenöfen und Vorrichtung zur Durchführung des Verfahrens.

(30) Priorität: **03.04.85 DE 3512177**

(43) Veröffentlichungstag der Anmeldung:
**15.10.86 Patentblatt 86/42**

(45) Bekanntmachung des Hinweises auf die
Patenterteilung:
**29.04.92 Patentblatt 92/18**

(84) Benannte Vertragsstaaten:
**AT FR GB SE**

(56) Entgegenhaltungen:
**US-A- 3 493 664**

**Soviet Inventions Illustrated, Sektion E1, Woche 83/28, 24. August 1983, Derwent Publications Ltd., London, X25**

**Soviet Inventions Illustrated, Sektion E1, Woche E 21, 7. Juli 1982, Derwent Publications Ltd., London X25**

(73) Patentinhaber: **MANNESMANN Aktiengesellschaft**
**Mannesmannufer 2**
**W-4000 Düsseldorf 1(DE)**

(72) Erfinder: **Bretthauer, Karlheinz, Prof. Dr.**
**Berliner Strasse 45**
**W-3392 Clausthal-Zellerfeld(DE)**
Erfinder: **Obenauf, Hans-Dietrich**
**Rollstrasse 48**
**W-3392 Clausthal-Zellerfeld(DE)**

(74) Vertreter: **Meissner, Peter E., Dipl.-Ing. et al**
**Patentanwaltsbüro Meissner & Meissner,**
**Herbertstrasse 22**
**W-1000 Berlin 33(DE)**

**Beschreibung**

Die Erfindung betrifft ein Verfahren und eine Vorrichtung zur Symmetrierung der elektrischen Größen in Drehstrom-Lichtbogenöfen, insbesondere auch zur Kompensation der Unsymmetrie der Zuleitungsinduktivitäten, mittels Änderungen der Transformatorspannung und/oder der Elektrodenhöhenstandstellungen.

Die drei Lichtbögen eines Drehstrom-Lichtbogenofens haben jeweils vier für den Betrieb wesentliche Größen, nämlich die Lichtbogenlänge, die im wesentlichen der Lichtbogenspannung proportional ist, den Lichtbogenstrom, die Lichtbogenleistung und eine von der Lichtbogenlänge und dem Lichtbogenstrom abhängige Größe, die für den Verschleiß der Ofenzustellung von elektrischer Seite maßgeblich ist. Normalerweise ist eine Symmetrie dieser Größen zwischen den drei Strängen, d.h. den Lichtbögen, erwünscht. Eine Symmetrie zwischen den Lichtbögen herrscht dann, wenn die drei Lichtbogenspannungen und die drei Lichtbogenströme gleich groß sind. Damit sind dann auch alle anderen Lichtbogengrößen zwangsläufig symmetrisch, also Lichtbogenleistung, Verschleißkoeffizient und der Lichtbogenwiderstand, wenn man von möglichen Oberschwingungseinflüssen absieht. Diese Symmetrie wird jedoch insbesondere durch Unsymmetrien der Zuleitungsinduktivitäten gestört. Selbst Öfen mit symmetrischer Zuleitungsinduktivität, wie es z.B. durch die sogenannte triangulierte Leitungsführung erreichbar ist, weisen im Betrieb immer wieder Abweichungen von der Symmetrie auf, weil die Höhenstände der Tragarme z.B. wegen ungleicher Einspannlängen der Elektroden unterschiedlich sind, und weil beim Einschmelzen von Schrott bei ungleichmäßiger Chargierung die drei Elektrodenspitzen in ungleichen Höhen stehen können.

Zwar könnten bei unsymmetrischen Zuleitungsinduktivitäten die Elektrodenströme über die Elektrodenverstellung symmetrisch eingeregelt werden. Es müssen dann jedoch unterschiedliche Lichtbogenspannungen, d.h. Lichtbogenlängen, in Kauf genommen werden. Bei einer oberen Grenze für die Lichtbogenleistung bzw. den Verschleißkoeffizient bedeutet dies, daß möglicherweise nur ein Lichtbogen diese Grenzen ausschöpft, während die beiden anderen Lichtbögen nicht an der Grenze des Möglichen gefahren werden können. Würde man dagegen auf gleiche Lichtbogenspannungen einregeln, dann würden die Ströme unsymmetrisch. Möglicherweise kann nur in einem Strang die volle Stromstärke ausgenutzt werden, während dies in den beiden anderen Strängen nicht der Fall ist. Da aber beide Größen, nämlich Lichtbogenspannung und Lichtbogenstrom, zu symmetrieren sind, ist es Aufgabe der vorliegenden Erfindung, ein Verfahren anzugeben, mit dem eine Symmetrierung der elektrischen Größen im Drehstrom-Lichtbogenofen, d.h. der Lichtbogenspannung und des Lichtbogenstroms eingestellt werden kann.

Die Aufgabe wird durch die Anspruch 1 angegebenen Merkmale gelöst.

Dabei ist die Einrichtung zur Symmetrierung der Ströme über die Transformatorspannungen unabhängig von der Symmetrie der Lichtbogenspannungen. In besonderen Bedarfsfällen könnte also die Symmetrierung der Ströme auch bei gewollt unsymmetrisch eingeregelten Lichtbogenspannungen realisiert werden.

Neben dem Höhenstandsänderung der Elektroden ist die Transformatorspannung als zweite Stellgröße für die vollständige Symmetrierung erforderlich; und zwar muß ein Transformator eingesetzt werden, der unsymmetrische Ofenspannungen abzugeben in der Lage ist, wozu sich z.B. Mantel-Transformatoren eignen, die einen Stufenschalter besitzen, der die Spannungen der drei Phasen unterschiedlich einstellen kann.

Bekanntlich sind Lichtbogenöfen gemischte induktivohmsche Verbraucher, deren ohmsche Widerstände sich über die Lichtbogenlänge ändern lassen, so daß bei sekundärer Sternschaltung des Transformators eine Spannungserhöhung in einem Strang (Phase), dessen (deren) Strom größer werden soll, nicht hinreichend ist, da Transformatorsternpunkt und Ofensternpunkt nicht miteinander verbunden sind, also keine Nullkomponente des Stroms auftreten kann und somit Veränderungen in einem Strang normalerweise auch Veränderungen in den beiden anderen Strängen zur Folge haben. Es ist z.B. eine bekannte Erscheinung bei Öfen mit koplanarer Leitungsführung, bei der der mittlere Strang eine beträchtlich kleinere Ersatzschaltbild-Induktivität als die beiden äußeren besitzt, daß bei symmetrischer Transformatorspannung nicht etwa der mittlere Strang den größten Strom führt, sondern einer der äußeren. Durch Umkehr der Phasenfolge wird der größte Strom auf den anderen äußeren Strang verlagert, was sich aus den unterschiedlichen gegenseitigen Kopplungen zwischen den drei Hochstrombahnschleifen erklärt.

Wären für jeden Betriebszustand, d.h. jede beliebige Höhenlage der Tragarme die Ersatzschaltbild-Induktivitäten des Systems bekannt oder während des Betriebes leicht einmeßbar, dann könnten über Rechenprogramme nicht unbeträchtlichen Umfangs zwar die erforderlichen Stellungen der drei Stufenschalter berechnet und aufgrund des Ergebnisses automatisch eingestellt werden. Sowohl die meßtechnische Bestimmung der Ersatzschaltbild-Induktivitäten als auch die Aufstellung entsprechender Rechenprogramme ist grundsätzlich möglich, besitzt jedoch den Nachteil, sehr aufwendig zu sein. Demgegenüber kann nach der vorliegenden Erfindung ohne ständige Ermittlung der Ersatzschaltbild-Induktivitäten und damit mit geringstmöglichem Aufwand eine Symmetrierung der Lichtbogenströme herbeigeführt werden.

Es hat sich auch gezeigt, daß bei mittleren und größeren Öfen die Lichtbogenspannung fast ausschließlich von der Lichtbogenlänge, d.h. dem Höhenstand der Elektrodenspitze über dem Bad (Schrott), und kaum vom Lichtbogenstrom abhängt, so daß Veränderungen der Stromverteilung unter den drei Elektroden durch Verstellen an den Transformatorstufenschaltern praktisch keine Auswirkung auf die Elektrodenregelung haben.

Hierin liegt ein weiterer wesentlicher Vorteil der praktisch unabhängigen Lichtbogenspannungsregelung von der Lichtbogenstromregelung, wie sie die vorliegende Erfindung vorsieht.

Aus der Patentschrift US-A- 3 493 664 ist zwar ein Lichtbogenofen bekannt, der einen Transformatoren-Stufenschalter und Mittel zur strommaßigen Entlastung dieses Stufenschalters beim Wechsel der Spannungsstufen besitzt. Diese Mittel zur Verlängerung der Lebensdauer des Stufenschalters durch Reduzierung des Stromes bei jedem Umschalten unter Last zur Verringerung der Kontaktbelastung sind für den vorliegenden Anmeldungsgegenstand wenig hilfreich. An den beim Anmeldegegenstand eingesetzten Transformatoren-Stufenschalter werden keine besonderen Forderungen gestellt, weder im Aufbau, noch in seiner besonderen Behandlung während des Schaltens. Zur Regelung des aus der obengennnten Patentschrift bekannten Ofens werden die Lichtbogenofenspannung und der Lichtbogenstrom herangezogen. Diese genannten Größen sind die Voraussetzung für eine Impedanzregelung, also einem Quotienten von Spannung und Strom. Bei dem bekannten Ofen wird die in der Praxis übliche Impedanzregelung benutzt, die auf dem Quotienten von Ofenspannung und Bogenstrom basiert. Die Benutzung der Bogenspannung, also die zwischen der Spitze der Elektrode und dem Schmelzgefäß gemessene Spannung, bietet sich schon daher nicht an, da sie im rauhen Otenbetrieb äußerst schwierig, wenn überhaupt gemessen werden kann.

Nach einer weiteren bevorzugten Ausbildung der Erfindung wird ein symmetrischer Strom-Soll-Wert vorgegeben, dessen Abweichungen von den momentanen Strom-Ist-Werten festgestellt und dementsprechend in einer, in zwei oder in drei Phasen die Spannungen geändert werden. Nach Spannungsänderung werden die sich einstellenden Strom-Ist-Werte erneut gemessen und je nach Abweichung vom symmetrischen Strom-Soll-Wert das Verfahren iterativ in jeder Phase so lange wiederholt, bis die in den drei Strängen verbleibenden Abweichungen von den Strom-Soll-Werten kleiner sind als die durch den letzten Schaltschritt hervorgerufenen Änderungen.

Nach einer weiteren vorteilhaften Ausbildung wird in einem ersten Schaltschritt lediglich die Spannung eines Stranges geändert, sofern noch keine Anhaltswerte für die von einem Schaltschritt hervorgerufenen Stromänderungen vorliegen. Der Schaltschritt erfolgt in dem Strang, der die größte Stromabweichung aufweist. Die im geschalteten Strang erzielte Stromänderung gilt als zu erwartende Änderung beim nächsten Schaltschritt. Dabei wird angenommen, daß bei Schaltung in zwei Strängen die Veränderung in jedem der geschalteten Stränge doppelt so hoch wäre und bei Schaltung in drei Strängen dreimal so hoch. Untersuchungen haben ergeben, daß eine solche Spannungsänderung stets in der richtigen Richtung liegt, also nicht bei späteren Spannungsänderungen, auch nicht, wenn diese in den anderen Strängen erfolgen sollen, wieder zurückgenommon werden muß.

Bevorzugt werden in dem zweiten Schaltschritt die Spannungen der Stränge verändert, deren Ströme nach dem ersten Schaltschritt eine größere Abweichung vom Soll-Wert zeigen als aufgrund der Stromänderungen im ersten Schaltschritt als Änderung im zweiten Schaltschritt zu erwarten ist unter Berücksichtigung der drei Möglichkeiten, daß im zweiten Schaltschritt eine, zwei oder drei Strangspannungen verändert werden. Vorteilhafterweise wird vor dem dritten und vor allen weiteren Schaltschritten die durchschnittliche Stromänderung in den geschalteten Phasen ermittelt. Die Spannung soll dann nur in den Phasen geändert werden, in denen auf Grund der im letzten Schaltschritt bewirkten Stromänderung beim nächsten Schaltschritt Stromänderungen zu erwarten sind, die kleiner als die vorhandene Abweichung vom Sollwert sind, wieder in Abhängigkeit davon, ob in zwei oder drei Phasen geschaltet wird.

Verbleiben nach drei oder mehr Schaltschritten Restunsymmetrien, die unterhalb der durch den Stufenschalter des Transformators vorgegebenen Werte liegen, so können diese abschließend durch Änderung der Lichtbogenspannungen hin zu einer leicht unsymmetrischen Einstellung der Lichtbogenlänge zugunsten einer symmetrischen Stromverteilung ausgeglichen werden. Sollten im Gegensatz zur bisherigen Annahme bereits vor dem ersten Schaltschritt Anhaltswerte für die von einem Schaltschritt hervorgerufenen Stromänderungen vorhanden sein, dann kann das Verfahren mit einem der vorauf beschriebenen Folgeschritte beginnen.

Bevorzugt wird man sich zur Durchführung des Verfahrens einer Vorrichtung bedienen, in der der Drehstrom-Lichtbogenofen einen Transformator in Sternschaltung mit einem Stufenschalter für jede Phase aufweist. Der Stufenschalter wird bevorzugt mit einem Impulsgeber verbunden, der zweckmäßigerweise einen Speicher sowie einen Differenz- und Mittelwertbildner, ggf. in Form eines Microcomputers, enthält. Dieser Impulsgeber ist mit einem Meßwertgeber für die Ströme in den drei Strängen verbunden.

Der Microcomputer begrenzt darüber hinaus die Spreizung der drei Transformatorspannungen (Stufenschalter-Stellungen) auf das durch die Konstruktion des Transformators zulässige Maß.

Im folgenden soll der Anmeldungsgegenstand anhand konkreter Ausführungsbeispiele erläutert werden.

Eine Stromsymmetrierung kann während einer Charge möglicherweise unter verschiedenen Aspekten erfolgen. Beim Einschmelzen von Schrott ist häufig die Lichtbegenlänge und damit die Zustellungsverschleißgröße ohne Bedeutung, weil der noch nicht eingeschmolzene Schrott die Ofenzustellung abschirmt. Während des Einschmelzens von Schrott könnte daher die Stromtragfähigkeit des Transformators und der Elektroden über eine Stromsymmetrierung mittels der Elektrodenverstellung erreicht werden, wobei die Stromregelung und -symmetrierung sich schnell den Veränderungen beim Einschmelzen anpassen könnte. Die Lichtbogenspannungen werden während dieser Betriebsphase normalerweise unsymmetrisch sein.

Nach dem Einschmelzen dagegen treten keine schnellen Veränderungen der Verhältnisse im Ofen mehr auf. Die Symmetrierung muß jetzt bei geforderten symmetrischen Lichtbogenlängen über die Transformatorspannungen erfolgen, wobei es nicht von Nachteil ist, wenn diese Symmetrierung aufgrund der relativ langsamen Reaktionen der Stufenschalter eine gewisse Zeit in Anspruch nimmt. Dennoch sollte die Zeit bis zur Herstellung der Symmetrie möglichst wenig länger dauern als durch die von der Konstruktion des Stufenschalters vorgegebenen Zeiten für das Durchlaufen der Umschaltstufen. Nach Messung der Lichtbogenströme in jedem der drei Stränge wird in einem ersten Schaltschritt nur diejenige Spannung des Stranges verändert bzw. durch den Transformatorstufenschalter geschaltet, die in erster Linie den Strom mit der größten Abweichung vom gewünschten Soll-Wert beeinflußt.

Nach dem ersten Schaltschritt wird aus den Veränderungen der Stromstärken in den Strängen geprüft, in welchen Strängen eine weitere Änderung der Stromstärke in Richtung des Strom-Soll-Werts vorgenommen werden muß.

Generell kann nach der vorliegenden Erfindung davon ausgegangen werden, daß die Veränderungen der drei Ströme bei einem nachfolgenden Schaltschritt am gleichen bzw. an den gleichen Stufenschaltern in ähnlicher Größenordnung liegen würden wie beim vorhergehenden Schaltschritt. Ferner kann unterstellt werden, daß bei einer Schaltung in zwei Strängen die Veränderungen maximal doppelt so groß und bei einer Schaltung in drei Strängen maximal dreimal so groß sein können. Umfangreiche Versuche haben gezeigt, daß der zweifache bzw. dreifache Wert in der Praxis nicht erreicht wird, so daß die entsprechenden Schalthandlungen (Spannungsänderungen) stets so vorgenommen werden können, ohne daß die Zielstellung in einem Strang überlaufen wird.

Bezeichnet man den gewünschten symmetrischen Stromwert mit $I_S$ und die Abweichungen der tatsächlichen Ströme von diesem Soll-Wert mit $\Delta I$, so gilt für die jeweilige Abweichung der Ströme vom Soll-Wert

$$\Delta I_{u,\nu} = I_S - I_{u,\nu}$$

Der erste Index $\mu$ soll die jeweilige Phase bezeichnen, also 1, 2 oder 3, während der zweite Index $\nu$ der Zählwert der bereits erfolgten Schaltschritte ist. Im Ausgangszustand wären die Abweichungen demnach in den einzelnen Phasen

$$\Delta I_{1,0} = I_S - I_{1,0}$$
$$\Delta I_{2,0} = I_S - I_{2,0}$$
$$\Delta I_{3,1} = I_S - I_{3,1}$$

Nach dem ersten Schaltschritt in nur einem Strang lautet das Gleichungssystem dementsprechend:

$$\Delta I_{1,1} = I_S - I_{1,1}$$
$$\Delta I_{2,1} = I_S - I_{2,1}$$
$$\Delta I_{3,1} = I_S - I_{3,1}$$

In der Regel haben sich alle drei $\Delta I$-Werte, wenn auch ggf. unterschiedlich stark, verändert. Diese Veränderungen der $\Delta I$-Werte, die mit $\delta$ bezeichnet werden sollen, im jeweils geschalteten Strang sind nun dafür entscheidend, ob im zweiten Schaltschritt wieder nur in einem oder in zwei oder in drei Strängen die

4

Spannungen verändert werden sollen. Jedenfalls hat der erste Schaltschritt, der quasi als Testschaltschritt dient, gezeigt, in welcher Größenordnung die Stromänderung in den Strängen liegt, wenn in einer der Phasen eine Spannungsänderung um eine Stufe vorgenommen wird. Mit diesem Schaltschritt wird also die Größe

$$\delta_{\mu,1} = |I_{\mu,0} - I_{\mu,1}|$$

($I_{\mu,\nu}$ = Ströme der Phase mit der größten Abweichung vom Soll-Wert) bestimmt, die streng genommen nur für die geschaltete Phase gilt. Versuche haben jedoch gezeigt, daß die bei den normalerweise auftretenden Unsymmetrien der Induktivitäten sich ergebenden Abweichungen in den Stromänderungen nicht so groß sind, als daß dieser Wert nicht als Anhaltswert für die nächste notwendige Änderung genommen werden kann. Damit läßt sich für die auf den ersten Schaltschritt folgende Spannungsänderung folgende Regel angeben:

Sind alle drei $|\Delta I_{\mu,1}| \geqq 3\delta_{\mu,1}$ darf im zweiten Schaltschritt in drei Phasen gleichzeitig die Spannung geändert werden. Sind wenigstens zwei $|\Delta I_{\mu,1}| \geqq 2\delta_{\mu,1}$, darf in den beiden Phasen mit der größten Abweichung vom Strom-Soll-Wert geschaltet werden. In allen anderen Fällen darf nur in der Phase mit der größten Abweichung die Spannung geändert werden.

Für das weitere vorgehen ab dem dritten Schaltschritt wird als Hilfsgröße die durchschnittliche Stromänderung je geschalteter Phase $\overline{\delta I}_{\nu,n}$ (n = Zahl der geschalteten Phasen) herangezogen. $\overline{\delta I}_{\nu,n}$ ergibt sich als mittlerer Unterschied der Stromabweichungen $\Delta I_{\mu,\nu}$ in den geschalteten Phasen vor und nach der Schalthandlung, geteilt durch die Zahl der geschalteten Phasen n.

$$\overline{\delta I}_{\nu,n} = \frac{\sum |\Delta I_{\mu,\nu-1}| - \sum |\Delta I_{\mu,\nu}|}{n}$$

Ergab z.B. der Testschritt, daß in allen drei Phasen geschaltet werden durfte, so bestimmt sich $\overline{\delta I}_{2,n}$ zu:

$$\overline{\delta I}_{2,3} = \frac{|\Delta I_{1,1}| + |\Delta I_{2,1}| + |\Delta I_{3,1}| - (|\Delta I_{1,2}| + |\Delta I_{2,2}| + |\Delta I_{3,2}|)}{3}$$

Entsprechend ergibt sich, wenn beispielsweise nur die Phasen 1 und 3 geschaltet wurden

$$\overline{\delta I}_{2,2} = \frac{|\Delta I_{1,1}| + |\Delta I_{3,1}| - (|\Delta I_{1,2}| + |\Delta I_{3,2}|)}{2}$$

Wurde nur in Phase 1 geschaltet, lautet der Ausdruck: $\overline{\delta I}_{2,1} = |\Delta I_{1,1}| - |\Delta I_{1,2}|$

Für das weitere Vorgehen werden jetzt die $|\Delta I_{\mu,\nu}|$ mit den ermittelten $\overline{\delta I}_{\nu,n}$ verglichen. Gilt für alle $|\Delta I_{\mu,\nu}|$:

$|\Delta I_{\mu,\nu}| \geqq \overline{\delta I}_{\nu,3}$ oder $|\Delta I_{\mu,\nu}| \geqq \frac{3}{2} \overline{\delta I}_{\nu,2}$ oder $|\Delta I_{\mu,\nu}| \geqq 3\overline{\delta I}_{\nu,1}$

dann darf im folgenden Schritt in allen drei Phasen geschaltet werden.

Gilt für mindestens zwei $|\Delta I_{\mu,\nu}|$:

$|\Delta I_{\mu,\nu}| \geqq \frac{2}{3} \overline{\delta I}_{\nu,3}$ oder $|\Delta I_{\mu,\nu}| \geqq \overline{\delta I}_{\nu,2}$ oder $|\Delta I_{\mu,\nu}| \geqq \overline{\delta I}_{\nu,1}$

dann kann in den beiden Phasen mit der größten Abweichung der Ströme vom Soll-Wert geschaltet werden.

In allen anderen Fällen darf nur in der einen Phase mit der größten Differenz zum Soll-Wert die Spannung verändert werden.

5

Entsprechend wird für den nächsten Schaltschritt ermittelt, in wie vielen Phasen geschaltet werden kann. Während für die Berechnung der $\overline{\delta I}_{\nu,n}$ die Beträge der $\Delta I_{u,\nu}$ einzusetzen sind, entscheidet über die Richtung der Spannungsänderung das Vorzeichen der $\Delta I_{u,\nu}$. Negatives Vorzeichen bedeutet zu großen Strom, die Spannung ist daher herabzusetzen, entsprechend bedeutet positives Vorzeichen zu kleinen Strom, die Spannung in dieser Phase ist daher zu vergrößern.

Dieses Verfahren wird so lange fortgesetzt, bis die kleinste Abweichung $\Delta I$ kleiner ist als die letzte Veränderung $\overline{\delta I}$. Restunsymmetrien im Strom können dann nur noch über unsymmetrische Einstellung der Lichtbogenspannungen ausgeglichen werden.

Dies liegt daran, daß die Transformatorspannungen sich nur stufenweise verändern lassen. Daraus folgt, daß im Normalfall eine geringe Restunsymmetrie der Ströme verbleibt, die nicht mehr über die Transformatorspannungen ausgeglichen werden kann. Sollte die Stromsymmetrie - in Sonderfällen möglicherweise auch einer ganz bestimmten unsymmetrischen Stromverteilung - der Vorrang gegeben werden, dann muß dem durch einen Spielraum bei der Einstellung der Lichtbogenspannung Rechnung getragen werden. Dies geschieht durch eine Veränderung der Lichtbogenspannungen zugunsten einer symmetrischen Stromverteilung.

Zur Durchführung des erfindungsgemäßen Verfahrens bedient man sich vorteilhafterweise einer Ofenanlage, von der ein Ausführungsbeispiel in den Abbildungen dargestellt ist. Es zeigen

Fig. 1 eine schematische Zeichnung des Lichtbogenofens mit den Teilen, die zur Durchführung des erfindungsgemäßen Verfahrens erforderlich sind,

Fig. 2 eine schematische Zeichnung einer automatischen Stromsymmetrierungsschaltung und

Fig. 3 eine schematische Darstellung der erforderlichen Daten und Steuerleitungen zwischen Stufenschalter und Rechner.

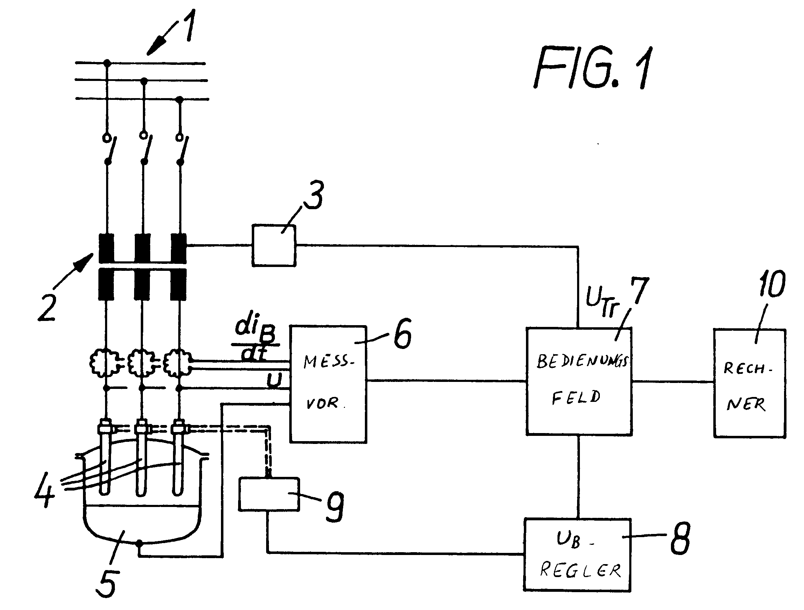

Die in Fig. 1 dargestellte Ofenanlage 1 besitzt einen Transformator 2 mit Stufenschalter 3 zur Regelung der Spannung der Elektroden 4 über dem Bad 5 Über eine Meßvorrichtung 6 werden die Meßgröße $di_B/dt$ als Maß für den Elektrodenstrom und die Spannung u gemessen und an ein Bedienungsfeld 7 abgegeben, über das entweder per Handeinstellung der Stufenschalter 3 und der $U_B$-Regler 8, die mit ihm verbunden sind, ansteuerbar sind. Der $U_B$-Regler 8 regelt die Einrichtung zur Elektrodenhöhenstandseinstellung 9. Neben der Handeinstellung ist es jedoch auch möglich, die Funktion des Bedienungsfeldes von einem Rechner 10 übernehmen zu lassen. Mittels der beschriebenen Anlage ist es möglich, nicht nur die Symmetrierung der drei Lichtbogenströme untereinander herbeizuführen, sondern sie auch auf einem vorgegebenen Wert zu halten. Neben der Erfassung der tatsächlich fließenden Lichtbogenströme ist deshalb auch die Vorgabe eines Stromsollwertes erforderlich. Dieser kann entweder von Hand im Bedienungsfeld 7 eingestellt werden oder er wird bei automatischem Betrieb von einem Prozeßrechner 10 geliefert. Ob die Einstellung von Hand am Bedienungsfeld oder einer Eingabe über einen Prozeßrechner erfolgt, ist insofern gleichgültig, da in beiden Fällen die Sollwerte in digitaler Form vorliegen und somit direkt von einem Rechner verarbeitet werden können. Die drei Ist-Werte der Lichtbogenströme liegen seitens der Meßeinrichtung 6 zunächst in analoger Form vor und müssen zur Verarbeitung zunächst digitalisiert werden. Wegen der relativ langen Schaltzeiten des Stufenschalters können die drei Strommeßwerte nacheinander abgefragt, einem A/D-Wandler zugeführt und seriell in den Rechner eingelesen werden. Schließlich muß dem Rechner mitgeteilt werden, ob zum gegenwärtigen Zeitpunkt eine Symmetrierung erwünscht ist oder nicht. Zwischen Rechner und Stufenschalter muß deshalb eine hinreichend große Datenbreite übertragbar sein.

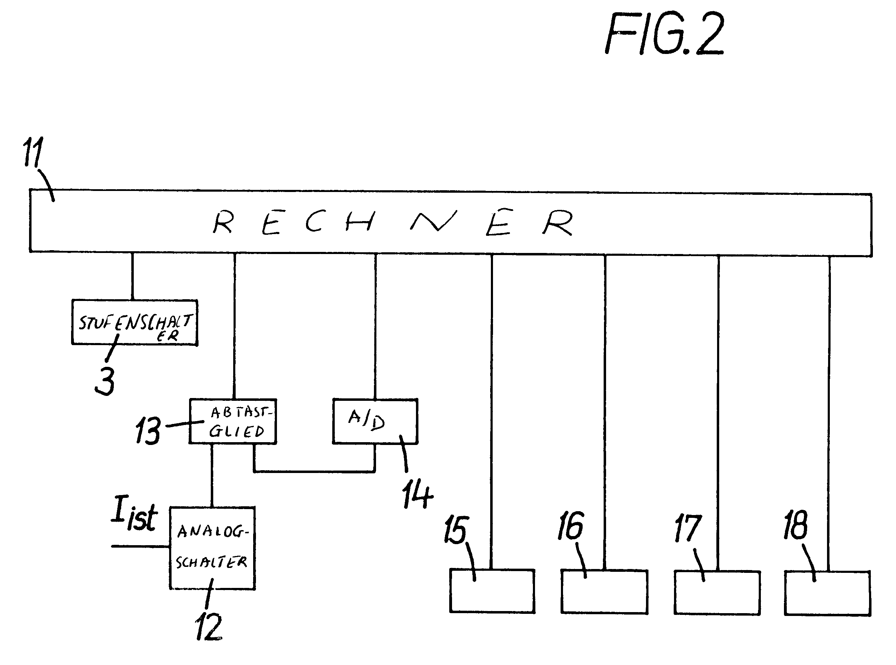

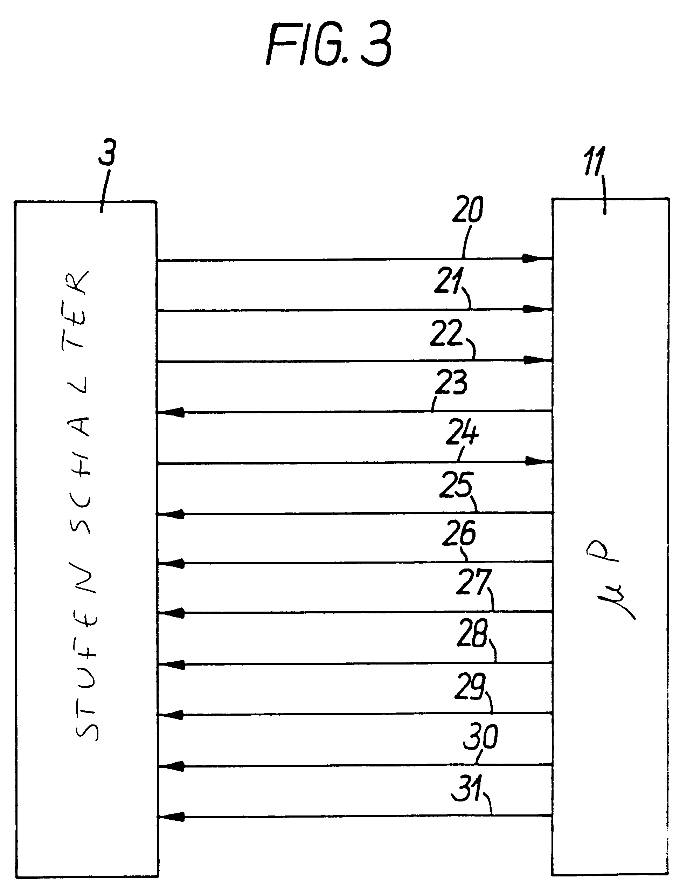

In Fig. 2 ist das Zusammenwirken zwischen Stufenschalter 3 und dem Rechner 11 skizziert, das in Fig. 3 mit siebzehn Ein- oder Ausgabeleitungen näher dargestellt ist. Die Strom-Ist-Werte laufen in einen Analogschalter 12 ein, der die Meßwerte seriell in einen Sample and Hold Baustein 13 gibt, wo sie an einen A/D-Wandler 14 weitergegeben werden. Dieser A/D-Wandler 14 gibt die Meßwerte an den Rechner 11, dem auch die vorgegebenen Sollwerte zugeführt werden, weiter. Im einzelnen werden dem Rechner 11 über einen Codierschalter 15 der Strom-Soll-Wert, einen Codierschalter 16 für die Mindestabwichung zwischen Soll- und Ist-Werten, oberhalb der eine Verstellung des Stufenschalters 3 erfolgen soll, ferner einen Codierschalter 17 für die maximal zulässige Spreizung zwischen der höchsten und der niedrigsten Stufenschalterstellung (Spannungsdifferenz) und einen übergeordneten Rechner, der ggf. weitere Programmeingaben für den Rechner 11 vorgibt, entsprechende Soll-Werte zugeführt. Die der Anlage nach Fig. 2 zufallenden Aufgaben halten sich in solchen Grenzen, daß sie von einem Microcomputer 11 bewältigt werden können, der im wesentlichen aus Speicherbausteinen, Festwertspeichern (E-PPOM) und Arbeitsspeichern (RAM) besteht.

Fig. 3 zeigt die Verbindung des Rechners 11 mit dem Stufenschalter 3 mit einer übertragbaren Datenbreite von 17 bit. Maximal sind 32 Stufenschalterstellungen regelbar, für deren Angabe an den Rechner 11 eine Wortbreite von 5 bit erforderlich ist (Verbindung 20). Zwecks Angabe an den Rechner, zu welcher der drei Phasen die übermittelte Schalterstufe gehört, dient die Verbindung 21 mit zwei bit für die Phasennummer. Zwecks Meldung, daß eine gültige Stufenschalterstellung abgefragt werden kann, ist eine weitere 1 bit Leitung 22 erforderlich. Des weiteren sind noch Verbindungen 23 bis 31 vorgesehen, deren Datenbreite jeweils 1 bit zu den im folgenden aufgeführten Zwecken beträgt:

23: Anfordern der Stufenschalterstellung,

24: Meldung, wenn geschaltet wird,

25 bis 27: Schalten in Phasen 1 bis 3,

28 bis 30: Schaltrichtung in Phasen 1 bis 3,

31: Schaltbefehl.

Mit den obengenannten Steuerleitungen können Verstellkommandos für die Stufenschalter erzeugt werden, d.h. es sind die drei Möglichkeiten, nicht schalten, eine Stufe höher schalten und eine Stufe niedriger schalten, realisierbar. Dementsprechend sind je Stufenschalter zwei Steuerleitungen vorgesehen, eine für den Verstellbefehl selbst und eine, die die Richtung angibt, in die verstellt werden muß. In die Auswertung durch den Rechner muß die jeweilige Stellung der Stufenschalter, zumindest aber die obere und untere Endstellung aus folgendem Grund einbezogen werden: Aus den vorgegebenen Strom-Sollwerten und den ermittelten Strom-Istwerten berechnet der Rechner, in welchen Phasen und in welche Richtung geschaltet werden muß, um das gewünschte Ziel zu erreichen. Ein Stellbefehl darf aber nur gegeben werden, wenn die entsprechende Schalthandlung überhaupt ausgeführt werden kann oder darf. Ein Befehl zum Weiterschalten in der erforderlichen Richtung in nur dann zulässig, wenn die entsprechende Endstellung noch nicht erreicht ist bzw. wenn seitens des Transformators eine weitere Spreizung der Spannung zwischen zwei Phasen noch zulässig ist. Dies läßt sich feststellen durch das Fehlen des Signals "Endstellung" bzw. durch einen Vergleich der augenblicklichen Stellung des Stufenschalters mit der noch möglichen Änderung in der jeweiligen Richtung oder mit der zulässigen Spreizung.

Nach jeder Verstellung der Stufenschalter in einer, zwei oder allen drei Phasen muß der Rechner die neue Situation erst wieder durchrechnen, um daraus die nächsten Befehle abzuleiten. Man kann aber nicht von vornherein davon ausgehen, daß die Meldung der neuen Stellung zeitgleich mit dem Vollzug der gesamten Schalthandlung erfolgt. Es ist daher vorsorglich eine Leitung einzuplanen, die den Vollzug der Umschaltung des Lastschalters meldet.

## Patentansprüche

1. Verfahren zur Symmetrierung der elektrischen Größen in Drehstromlichtbogenöfen, vorrangig zur Kompensation der Unsymmetrie der Zuleitungsinduktivitäten mittels getrennter Änderung jeder der Transformator-Strangspannungen, gekennzeichnet durch die folgenden Verfahrensschritte:

a) Es wird ein Sollwert für den Lichtbogenstrom vorgegeben,

b) die Lichtbogenströme in jedem der drei Stränge werden gemessen,

c) es wird der Strang mit der größten Abweichung vom Sollwert des Lichtbogenstromes ermittelt,

d) die Lichtbogenspannungen der Stränge werden durch Änderung der Hohenstände der Elektrodenspitzen über dem Bad (Schrott) einander angeglichen,

e) durch stufenweise Änderung der Transformatorenspannungen werden unter Beobachtung der entsprechenden Lichtbogenstromstärken die Lichtbogenströme symmetriert,

f) iterativ werden die Verfahrensschritte b) bis e) so lange durchgeführt, bis die Abweichungen der Lichtbogenströme voneinander einen vorgegebenen Wert unterschreiten.

2. Verfahren nach Anspruch 1, dadurch gekennzeichnet, daß ein symmetrischer Strom-Soll-Wert vorgegeben wird, die Abweichungen von den Strom-Ist-Werten festgestellt und dementsprechend in einer, in zwei oder drei Phasen die Spannungen geändert werden, danach die sich einstellenden Strom-Ist-Werte gemessen und je nach Abweichung vom symmetrischen Strom-Soll-Wert das Verfahren iterativ in jeder Phase so lange wiederholt wird, bis die in den drei Strängen verbleibenden Abweichungen von den Strom-Soll-Werten kleiner sind als die durch den letzten Schaltschritt hervorgerufenen Änderungen der Stromstärken.

3. Verfahren nach Ansprüchen 1 und 2, dadurch gekennzeichnet, daß in einem ersten Schaltschritt die Spannung lediglich eines Stranges geändert wird, vorzugsweise in dem Strang, der die größte Stromabweichung aufweist.

**4.** Verfahren nach Ansprüchen 1 und 2, dadurch gekennzeichnet, daß im zweiten Schaltschritt die Spannungen der Stränge verändert werden, deren Ströme nach dem ersten Schaltschritt eine größere Abweichung vom Soll-Wert zeigen als diejenige Stromänderung, die durch den ersten Schaltschritt bewirkt worden ist und die daraufhin bei Betätigung von 1, 2 oder 3 Stufenschaltern zu erwarten ist.

**5.** Verfahren nach Ansprüchen 1 bis 4, dadurch gekennzeichnet, daß vor dem dritten und vor allen weiteren Schaltschritten die durchschnittliche Stromänderung in den geschalteten Phasen ermittelt wird und nur in den Phasen die Spannung geändert wird, in denen die aufgrund des letzten Schaltschritts bewirkten Stromänderungen bei Betätigung von 1, 2 oder 3 Stufenschaltern eine Stromänderung erwarten lassen, die kleiner ist als die vor dem Schalten gegebene Abweichung vom Sollwert.

**6.** Verfahren nach Anspruch 1, dadurch gekennzeichnet, daS Restunsymmetrien der Ströme, die unterhalb der Abweichungen liegen, die keinen weiteren Schaltschritt bewirken, abschließend durch Änderung der Lichtbogenspannungen durch gering unsymmetrische Einstellung der Elektrodenhöhenstände ausgeglichen werden.

**7.** Verfahren nach den Ansprüchen 1 bis 5.
dadurch gekennzeichnet.
daß die Transformatorenspannungen in der Weise überwacht werden, daß ihre Spreizung untereinander unter Inkaufnahme einer verbleibenden Stromunsymmetrie so begrenzt werden, wie es die Konstruktion des Transformators zuläßt.

**8.** Drehstromlichtbogen (1) mit einem einen Stufenschalter (3) aufweisenden Transformator (2), der über Stromzuführungen mit Elektroden (4) verbunden ist, sowie mit einer Vorrichtung zur Elektrodenhöhenstandsverstellung (9) und einer Regeleinrichtung (8) zur Durchführung des Verfahrens nach den Ansprüchen 1 bis 7,
dadurch gekennzeichnet,
daß der Transformator (2) ein Manteltransformator ist, der in Sternschaltung mit einem Stufenschalter (3) für jede Phase aufweist, der mit einem Impulsgeber (7) verbunden ist, der eine mit einem Strommeßgeber (6) verbundene Einheit darstellt, die einen Speicher, einen Differenz-und Mittelwertgeber enthält.

**Claims**

**1.** Method for balancing the electrical quantities in three-phase arc furnaces, primarily to compensate the unbalance in the supply lead inductances by separately varying each of the transformer phase voltages, characterised by the following method steps:
   a) A desired value for the arc current is predetermined,
   b) the arc currents in each of the three phase windings are measured,
   c) the phase winding with the greatest deviation from the desired arc current value is determined,
   d) the arc voltages of the phase windings are matched to one another by varying the heights of the electrode tips above the electrolyte (scrap),
   e) the arc currents are balanced, while observing the corresponding arc current strengths, by a stepwise variation of the transformer voltages,
   f) the method steps b) to e) are repeated until the deviations of the arc currents from one another fall below a predetermined value.

**2.** Method according to claim 1, characterised in that a balanced desired current value is predetermined, the deviations from the actual current values are established and the voltages varied accordingly in one, two or three phases, after which the actual current values are measured and, according to the deviation from the balanced desired current value, the method is repeated in each phase until the deviations from the desired current values remaining in the three phase windings are smaller than the variations in the current strengths caused by the last switching step.

**3.** Method according to claims 1 and 2, characterised in that the voltage of just one phase winding is varied in a first switching step, preferably in the phase winding with the greatest current deviation.

EP 0 197 329 B1

**4.** Method according to claims 1 and 2, characterised in that the voltages of the phase windings whose currents exhibit a greater deviation from the desired value after the first switching step than the current variation which had been caused by the first switching step and which is therefore to be expected upon operating 1, 2 or 3 step switches are varied in the second switching step.

**5.** Method according to claims 1 to 4, characterised in that the mean current variation in the connected phases is determined before the third and before all further switching steps, and the voltage is only varied in the phases in which, on the basis of the current variations caused by the last switching step, a current variation is expected which is smaller than the deviation from the desired value existing before switching when 1, 2 or 3 step switches is/are operated.

**6.** Method according to claim 1, characterised in that residual unbalances in the currents which lie below the deviations which do not give rise to any further switching step are finally corrected by varying the arc voltages by a slightly non-symmetrical setting of the electrode heights.

**7.** Method according to claims 1 to 5, characterised in that the transformer voltages are monitored such that, making allowance for a remaining current unbalance, the spread between them is limited to a degree permitted by the transformer design.

**8.** Three-phase arc furnace (1) with a transformer (2), which comprises a step switch (3) and is connected via supply leads to electrodes (4), and with a device (9) for adjusting the electrode heights and a control device (8) for carrying out the method according to claims 1 to 7, characterised in that the transformer (2) is a shell-type transformer, which is in star connection with a step switch (3) for each phase, which switch is connected to a pulse generator (7), which represents a unit which is connected to a current measuring instrument (6) and which comprises a store and a differential and mean value generator.

**Revendications**

**1.** Procédé pour équilibrer des grandeurs électriques dans des fours à arc à courant triphasé, en priorité pour la compensation des déséquilibres des inductances des lignes d'alimentation, par le variation séparés de chacune des tensions de phase du transformateur, caractérisé par les étapes de procédé suivantes:
   a) une valeur de consigne pour le courant d'arc est prédéfinie,
   b) les courants d'arc sont mesurés dans chacune des trois phases,
   c) on détermine la phase présentant l'écart le plus important par rapport à la valeur de consigne du courant d'arc,
   d) les tensions d'arc des phases sont équilibrées par modification de la position en hauteur des pointes d'électrodes au-dessus du bain (ferrailles),
   e) par une modification par pas successifs des tensions de transformateur, les courants d'arc sont équilibrés tout en examinant les intensités correspondantes des courants d'arc,
   f) les étapes de procédé b) à e) sont répétées jusqu'à ce que les écarts des courants d'arc entre-eux soient inférieurs à une valeur prédéfinie.

**2.** Procédé selon la revendication 1
caractérisé en ce qu'une valeur de consigne de courant d'équilibre est prédéfinie et les écarts par rapport aux courants réels sont déterminés, les tensions étant alors modifiées en conséquence, dans une, dans deux ou dans les trois phases, et en ce que les valeurs réelles de courant qui s'établissent alors sont mesurées et suivant leur écart par rapport à la valeur de consigne de courant d'équilibre, le procédé est répété de manière itérative dans chacune des phases jusqu'à ce que les écarts résiduels par rapport aux valeurs de consigne du courant, dans les trois phases, sont inférieures aux variations des intensités du courant produites par le dernier pas de commutation.

**3.** Procédé selon les revendications 1 et 2,
caractérisé en ce que dans un premier pas de commutation, seule la tension d'une phase est modifiée, de préférence dans la phase qui présente le plus gros écart de courant.

9

**4.** Procédé selon les revendications 1 et 2,
caractérisé en ce que dans le second pas de commutation, on modifie les tensions des phases dont les courants après le premier pas de commutation présentent un écart plus important par rapport à la valeur de consigne que la variation de courant qui a été produite par le premier pas de commutation et qui est à attendre ensuite lors de l'actionnement d'un, de deux ou de trois graduateurs.

**5.** Procédé selon les revendications 1 à 4,
caractérisé en ce qu'avant le troisième pas de commutation et avant tous les pas de commutation suivants, on détermine la variation de courant moyenne dans les phase commutées et en ce que l'on modifie la tension uniquement dans les phases dans lesquelles les variations de courant engendrées en raison du dernier pas de commutation, laissent supposer, lors de l'actionnement de 1, 2 ou trois graduateurs, une variation de courant qui est inférieure à l'écart par rapport à la valeur de consigne existant avant la commutation.

**6.** Procédé selon la revendication 1,
caractérisé en ce que des déséquilibres résiduels des courants, qui se situent en-dessous des écarts qui ne produisent pas de pas de commutation suivant, peuvent être compensés par une modification des tensions d'arc, par un réglage légèrement déséquilibré des positions en hauteur des électrodes.

**7.** Procédé selon les revendications 1 à 5,
caractérisé an ce que les tensions de transformateur sont contrólées de telle façon que leurs largeurs de plages de réglage réciproques sont limitées de la manière dont le permet la construction du transformateur, en tenant compte d'un déséquilibre résiduel de courant.

**8.** Four à arc à courant triphasé (1)
comportant un transformateur équipé d'un graduateur (3) et relié à des électrodes (4) par l'intermédiaire de lignes d'alimentation, ainsi qu'un dispositif (9) pour le réglage des positions en hauteur des électrodes, et un dispositif de régulation (8), pour la mise en oeuvre du procédé selon l'une des revendications 1 à 7, caractérisé en ce que le transformateur (2) est un transformateur à enveloppe qui comporte un graduateur (3) pour chaque phase, monté on étoile, et relié à un gébérateur d'impulsions (7) qui forme une unité reliée à un capteur de mesure de courant (6) et comprenant un gérérateur de différences et de valeurs moyennes.

FIG. 1

# FIG.2

EP 0 197 329 B1

# FIG. 3